# EUROPEAN PATENT SPECIFICATION

(11) **EP 4 025 446 B1**
(45) Date of publication and mention of the grant of the patent: **06.11.2024**
(21) Application number: 20780339.6
(22) Date of filing: 03.09.2020
(51) Int. Cl.: B60K 11/04, B60K 5/00, B60K 5/04

(54) **MOTOR VEHICLE WITH RADIATOR ON BOARD THE ENGINE**
KRAFTFAHRZEUG MIT KÜHLER AN BORD DES MOTORS
VÉHICULE AUTOMOBILE AVEC RADIATEUR À BORD DU MOTEUR

(30) Priority: 06.09.2019 IT 201900015749
(43) Date of publication of application: 13.07.2022
(73) Proprietor: Piaggio & C. S.P.A., 56025 Pontedera Pisa (IT)
(72) Inventor: PALMIERI, Vincenzo, 56025 Pontedera (IT); GALLI, Alessandro, 56025 Pontedera (IT)
(74) Representative: Savi, Massimiliano
(86) International application number: PCT/IB2020/058205
(87) International publication number: WO 2021/044336

(56) References cited:
- FR-A1- 2 960 831
- FR-A1- 2 972 684
- JP-A- 2011 157 977

## Description

### FIELD OF THE INVENTION

The present invention belongs to the technical field of vehicles. The present invention particularly belongs to the technical field of vehicles for transporting things or people, for example but not exclusively, of the type comprising a front wheel and two rear wheels (APE configuration). In detail, the present invention relates to a vehicle of the aforesaid type, comprising a powertrain suspended from the frame, where the powertrain comprises a thermal engine, a drive and a cooling system of the thermal engine, where said cooling system is integral with said powertrain. More in detail, the present invention relates to a vehicle of the aforesaid type, where said thermal engine and said drive are accommodated in a crankcase, and where at least the radiator and the fan of said cooling system are integral with said powertrain.

### BACKGROUND ART

Vehicles comprising a front wheel and two rear wheels, in particular driving wheels, are known. Said vehicles, commonly known under the trade name "APE" by Piaggio, are widely and satisfactorily employed for transporting things and people, said vehicles being provided for the purpose with a cabin (for the driver and any passengers) and a box for transporting goods, which is open or closed according to needs and/or circumstances, said box being positioned at the back with respect to said cabin (with reference to the driving direction). Said vehicles are started up by means of a powertrain which, also but not only for reasons of space, is installed in the rear part of the vehicle, below the box, in a substantially central position (with respect to the longitudinal vertical plane of symmetry of the vehicle). The powertrain comprises an (internal combustion) thermal engine and a drive system directly actuated by the thermal engine, through which the torque generated by the thermal engine is transferred to the two rear wheels of the vehicle. Conventionally, the drive system comprises a differential for transmitting the torque.

According to a first known embodiment, the thermal engine is cooled through an air cooling system. Said air cooling system comprises a cooling fan installed on the block containing the thermal engine, said fan being rotated by the same thermal engine (in particular, the fan usually being keyed onto the drive shaft). The air is conveyed with a given pressure against the head of the cylinder by means of the fan, where thereby the head of the cylinder yields to the flow of the air, part of the heat generated by the combustion.

An example of state-of-the-art vehicle is described in document FR2972684. The vehicle has a radiator arranged opposite a rear wheel in a state in which an air inlet surface and an air outlet surface of the radiator are directed in a longitudinal direction of the vehicle. A vehicle body comprises a rear part that covers from a top of a power unit comprising the radiator. The radiator is arranged in an inclined manner such that an external end of the radiator in a direction of width of the vehicle is positioned behind an internal end of the radiator in the width direction of the vehicle.

Although they may be appreciated due to construction simplicity, simple maintenance and immediate operations and curbed maintenance costs (as well as management simplicity), said air cooling vehicles however have drawbacks essentially resulting from that, for example under prolonged conditions of engine stress, the air cooling is not always capable of ensuring an adequate cooling of the engine.

In order to overcome the above drawbacks, and therefore to ensure an adequate and reliable cooling of the engine, alternative embodiments have been suggested according to which the cooling of the thermal engine is achieved by a liquid cooling system (for example, water with added liquid antifreeze). According to said solutions, the coolant is caused to circulate in defined channeling through the head and/or the cylinder, where therefore the heat generated by the combustion is yielded to the coolant. In particular, the coolant is conveyed, by means of tubes outside the engine, through a radiator in which it is cooled following a heat exchange with an airflow directed against the radiator and usually generated by means of a fan. Moreover, the circulation of the coolant is obtained by a circulating pump, usually directly actuated by the thermal engine through a mechanical coupling. Moreover, the cooling systems according to the known and most widely used and/or implemented solutions conventionally comprise a by-pass line provided for excluding the radiator if the temperature of the water close to the head of the cylinder is contained, or in any case below a predetermined value, the deflection of the coolant in the by-pass line being regulated or managed by means of a thermostat operatively installed on the head-cylinder of the thermal engine.

Moreover, it is worth noting that according to the known solutions and in order to optimize the yielding of heat by the liquid in the radiator to the airflow generated by the fan, the radiator is installed in position facing the fan. Finally, it is also worth noting that the liquid cooling systems of the known type also provide an expansion vessel communicating with the hydraulic circuit to compensate for the losses of load and therefore, ensure a given coolant flow rate.

However, although they ensure a more efficient, reliable and constant cooling of the thermal engine than that ensured by the air cooling systems, the above-summarized liquid cooling systems according to the known solutions also have drawbacks and/or disadvantages that the Applicant intends overcoming or at least minimizing by means of the present invention.

A first drawback relates to the design of the frame, and in general of the layout of the rear part of the vehicle, being currently affected by the type of cooling system provided. Indeed, the radiator and the expansion vessel in vehicles with a liquid-cooled engine are directly installed on the frame in positions adapted to perform the function thereof. This ensures that the overall volumes and means (mechanical connections, brackets, supports, etc., for example) required for positioning these components of the cooling system are considered during the design, in addition to what is required to install the liquid circulating pipes external to the engine, i.e. those connecting the radiator and the expansion vessel to the rest of the hydraulic circuit. The design of the frame and the layout of the vehicle are therefore affected by the type of cooling system intended to be installed, where practically the design of a corresponding frame and/or layout ad hoc is required for every cooling system, with apparent problems not only in terms of actual design, but also of organization of production and/or manufacturing flows.

Moreover, it is worth noting that the vibrations generated by the engine differ from those generated by the frame, therefore where the component parts of the cooling system are subjected both to the vibrations generated by the engine and to those generated by the frame, with apparent problems related to undesired disconnecting of tubes, mechanical stress, etc.

### SUMMARY

Therefore, it is the main object of the present invention to overcome or at least minimize the drawbacks encountered in the solutions according to the prior art briefly described above.

In particular, it is an object of the present invention to suggest a solution which allows to design the frame and the layout of a vehicle which is compatible with different cooling systems, or in other words, according to which different cooling systems may be installed on vehicles characterized by a common frame and/or layout.

Moreover, it is an object of the present invention to suggest a solution which allows the mechanical stress on the cooling system to be limited to the mechanical stress substantially generated by the vibrations of the engine alone.

According to the present invention, a motor vehicle as defined in independent claim 1 is provided.

The present invention derives from the general consideration according to which the problems detected in the solutions of the known type may be effectively overcome or at least reduced by installing the radiator, and preferably also the expansion vessel, on the engine body, in particular through suitable connection means. In other words, the idea at the basis of the present invention is that of incorporating the radiator and the expansion vessel in the "suspended mass" connected to the frame. This solution indeed allows the installation on the same vehicle (frame) of different engines and/or cooling systems, for example of an air-cooled engine and a liquid-cooled engine.

Moreover, the assembly of the vehicle is also considerably facilitated by the idea underlying the present invention, because the engine may be directly installed together with the cooling system. Simultaneously, the radiator, the expansion vessel and the external hydraulic tubes vibrate in the same manner as the engine because they are connected thereto. This reduces the risk of breakdowns and at least partially avoids oversizing the connections currently required to resist different vibrating manners.

According to an embodiment, said cooling system comprises an expansion vessel, where also said expansion vessel is integral with said powertrain so as to also form part of said mass suspended from said frame.

According to an embodiment, said expansion vessel comprises a lower metal part fastened to said powertrain and an upper plastic material part including an opening and a corresponding closing plug.

According to an embodiment, said expansion vessel is fastened to the head of said thermal engine.

According to an embodiment, said fan is arranged between said crankcase and said radiator.

According to an embodiment, said radiator is supported by a support element fastened to said crankcase.

According to an embodiment, said fan is keyed onto a rotating shaft which protrudes from said crankcase and is rotated by said thermal engine.

According to an embodiment, said rotating shaft coincides with the drive shaft of said thermal engine.

According to an embodiment, said support element is shaped so as to define an inner space in which said fan is at least partially accommodated.

According to an embodiment, said support element has a main opening on the wall opposite to said crankcase, where said radiator and said fan are arranged facing said opening.

According to an embodiment, said support element comprises a side wall which radially delimits said inner space and extends from said wall with said opening, where said side wall comprises a plurality of secondary openings adapted to allow the at least partial discharge of the airflow from said radiator.

According to an embodiment, said cooling system comprises a pump for circulating said coolant, where said pump is actuated by a rotating shaft which protrudes from said crankcase and is rotated by said thermal engine.

According to an embodiment, the rotating shaft for actuating said pump coincides with the drive shaft of said thermal engine.

According to an embodiment, with respect to said powertrain, said pump is positioned on the side opposite to that of said radiator.

According to an embodiment, said vehicle has a three-wheel type configuration with one front steering wheel and two rear wheels in line with each other, and comprises a cabin for transporting passengers and said box is for transporting goods and is positioned at the back with respect to said cabin, and wherein said powertrain is like a mass suspended from said frame in position below said box.

Possible further embodiments of the present invention are defined by the claims.

### BRIEF DESCRIPTION OF THE DRAWINGS

The present invention is further clarified by means of the description of the embodiments depicted in the drawings, in which:
- Figures 1 to 5 show a partial sectional side view, a partial sectional rear perspective view, a partial sectional side perspective view, a partial sectional perspective view, and a partial sectional top view, respectively, of a vehicle according to an embodiment;
- Figures 6 to 10 show a side view, a perspective view, a partial sectional perspective view, a further perspective view, and a top sectional view, respectively, of a powertrain of a vehicle according to an embodiment;
- Figure 11 shows a further side view of a powertrain of a vehicle according to an embodiment;
- Figure 12 shows an exploded view of a powertrain of a vehicle according to an embodiment;
- Figures 13 to 15 show further side perspective views and a top view, respectively, of a powertrain of a vehicle according to an embodiment;
- Figures 16 and 17 show an exploded view and a sectional view, respectively, of a powertrain for a vehicle according to an embodiment;
- Figures 18 and 19 each show a diagram of a cooling system or circuit of a powertrain of a vehicle according to an embodiment of the present invention.

The same reference numerals and letters in the Figures identify the same elements or components.

### DETAILED DESCRIPTION OF THE PRESENT INVENTION

A description of the embodiments of the present invention shown in the drawings is given below, the present invention moreover not being limited to the embodiments described below and/or shown in the drawings; in particular, the present invention being a particularly advantageous application in three-wheel vehicles with trim of the type of the known Piaggio vehicle referred to as "APE"; the embodiments of the present invention shown in the drawings are described and clarified below with particular reference to the possible applications thereof in vehicles of the aforesaid type, the possible applications of the present invention moreover not being limited to Piaggio vehicles referred to as "APE".

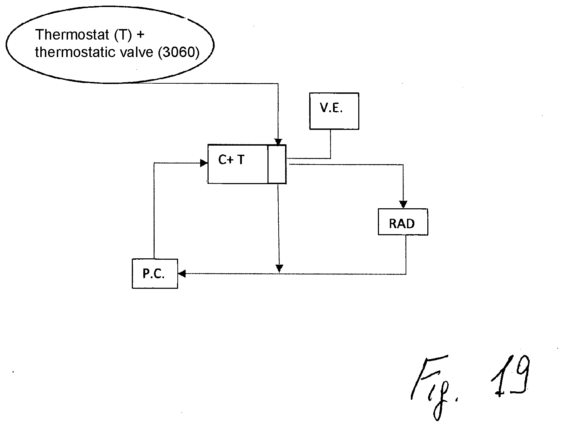

Figure 19 shows the operating principles of a liquid cooling system of the known type.

As shown, the cooling water, possibly with added antifreeze and/or anti-corrosion liquids, is circulated through pump PC in the inner channeling of the head and cylinder (CT). The liquid is heated and crosses the radiator (RAD), where heat is yielded to the external air. When thermostat T detects a temperature of the engine below a predetermined threshold (cold engine), the flow of liquid is deflected along a by-pass line which cuts out the radiator (RAD). The deflection of the flow occurs through a thermostatic valve which is directly controlled by thermostat (T). The expansion vessel (VE) is connected to the inlet branch of the radiator (RAD). The expansion vessel (VE) contains liquid and air and serves the purpose both of compensating for the volume of liquid during evaporation, thus allowing the filling of the circuit and the air purge. As mentioned, the layout is of the known and/or conventional type.

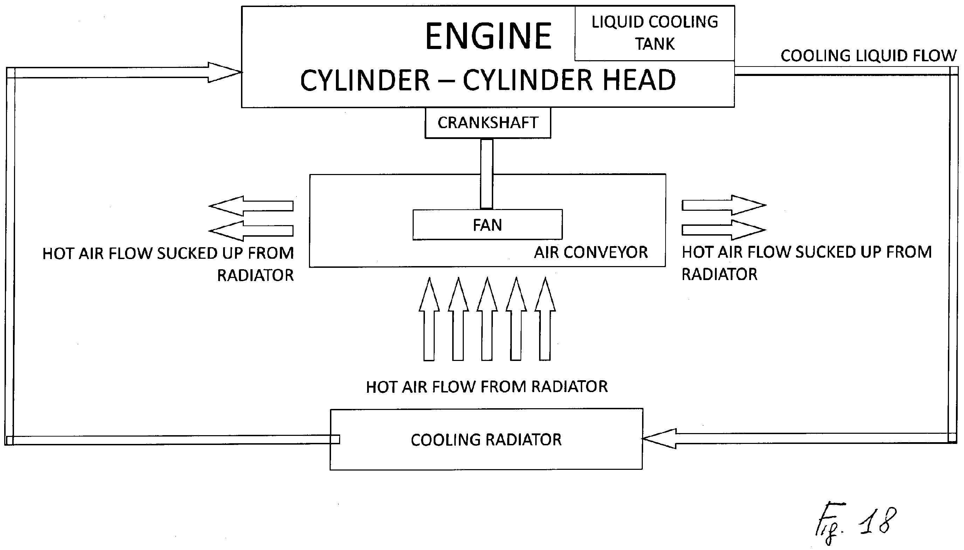

Moreover, as shown in Figure 18, the ambient air, by means of a rotary fan (FAN), is induced to cross the radiator (COOLING RADIATOR), where the coolant in the radiator (RAD) yields heat to the air crossing it, and where the air, heated in outlet from the radiator (RAD), is deflected in direction of the powertrain (CYLINDER and CYLINDER HEAD) so as to create a heat exchange aiming to cool the same powertrain, in particular engine 201, the temperature of which is in any case higher than the air heated by the radiator.

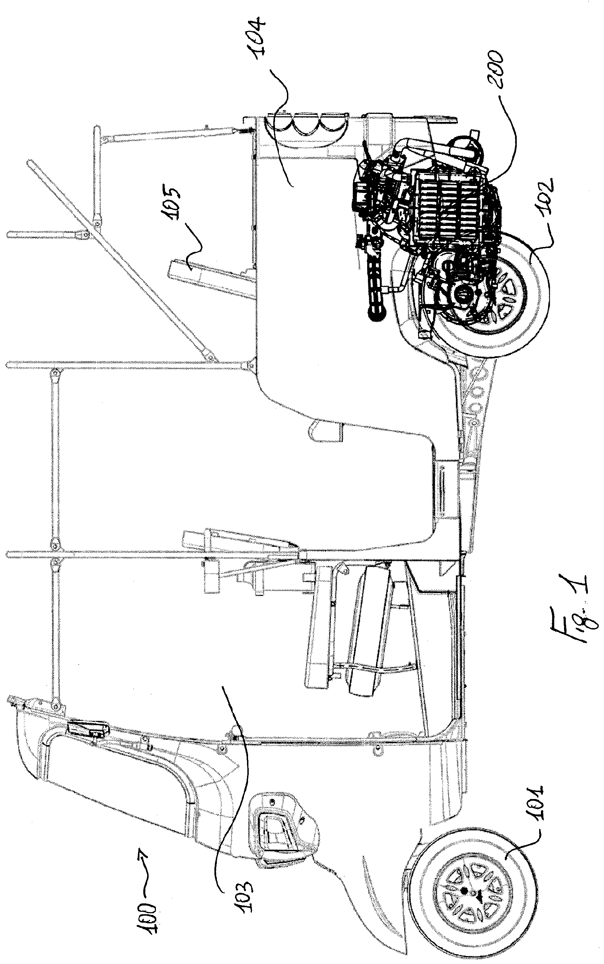

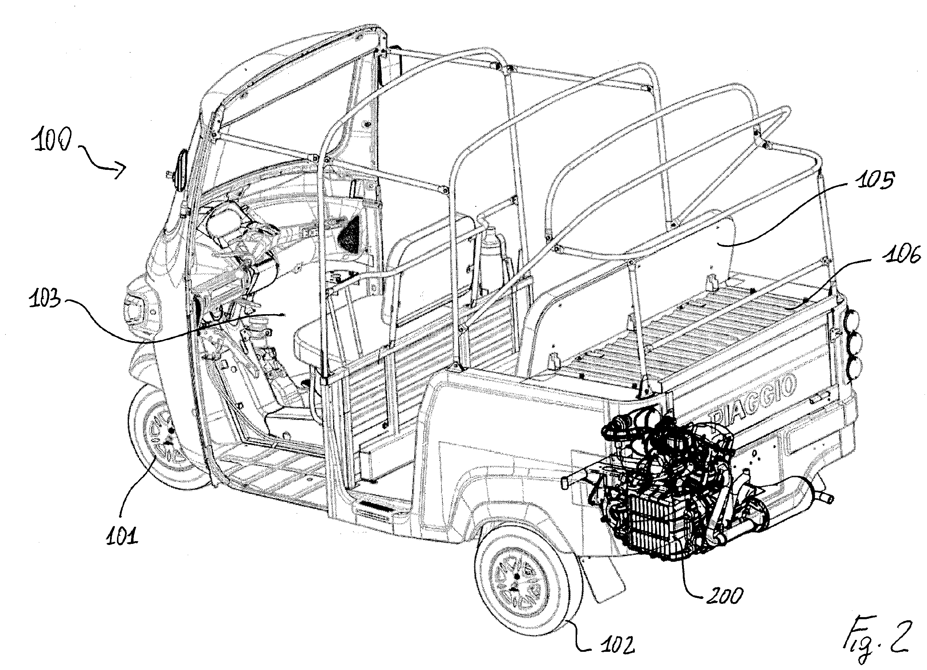

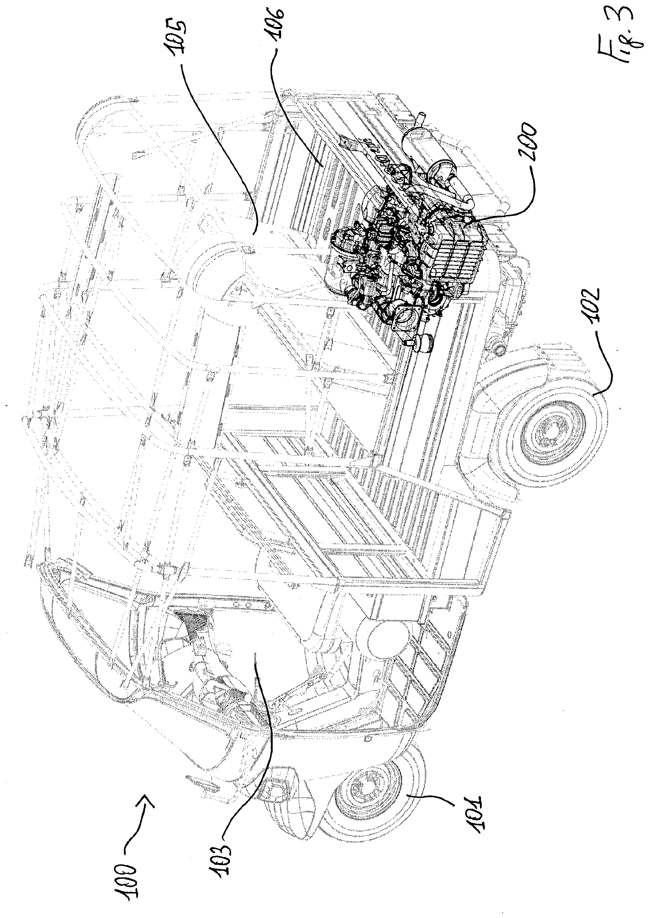

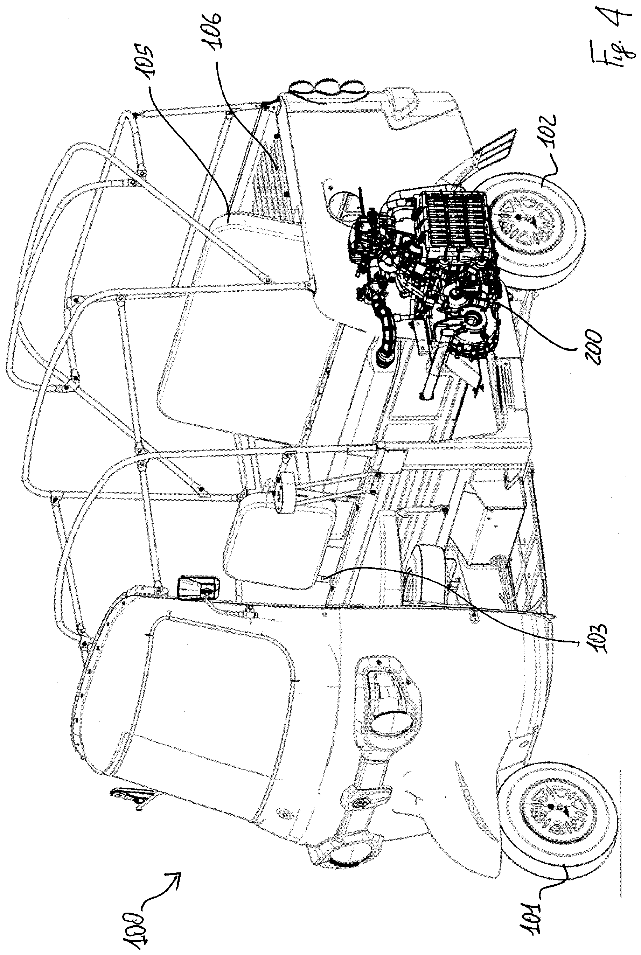

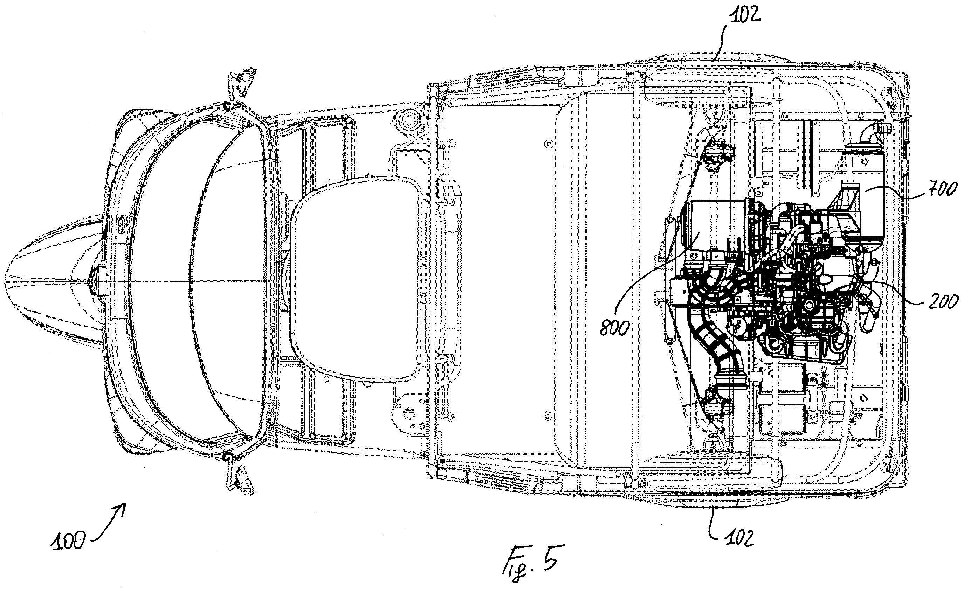

Reference numeral 100 in Figures 1 to 5 identifies a vehicle including a front steering wheel 101, rear driving wheels 102 arranged along a common rotation axis and spaced apart from each other according to a given wheelbase, a driving cabin for accommodating the driver and any passengers, and finally a box 104 for transporting goods and/or further passengers; in particular, according to the embodiment depicted, a rear seat 105 is positioned in box 104, box 104 therefore being adapted to accommodate both goods and/or luggage (at the back with respect to seat 105) and passengers (sitting on seat 105).

Vehicle 100 therefore has a three-wheel shape in which the rear wheels are fixed with respect to the front axle, i.e. they do not roll with respect to it. Thereby, the vehicle and the corresponding box 104 allow to carry loads which keep a stable position on floor 106 even when the vehicle takes a corner.

Moreover, again as shown, box 104 is delimited at the bottom by a floor 106, where vehicle 100 comprises a powertrain (described in greater detail below) accommodated below floor 106, in particular suspended (hung) from floor 106 according to methods described in greater detail below.

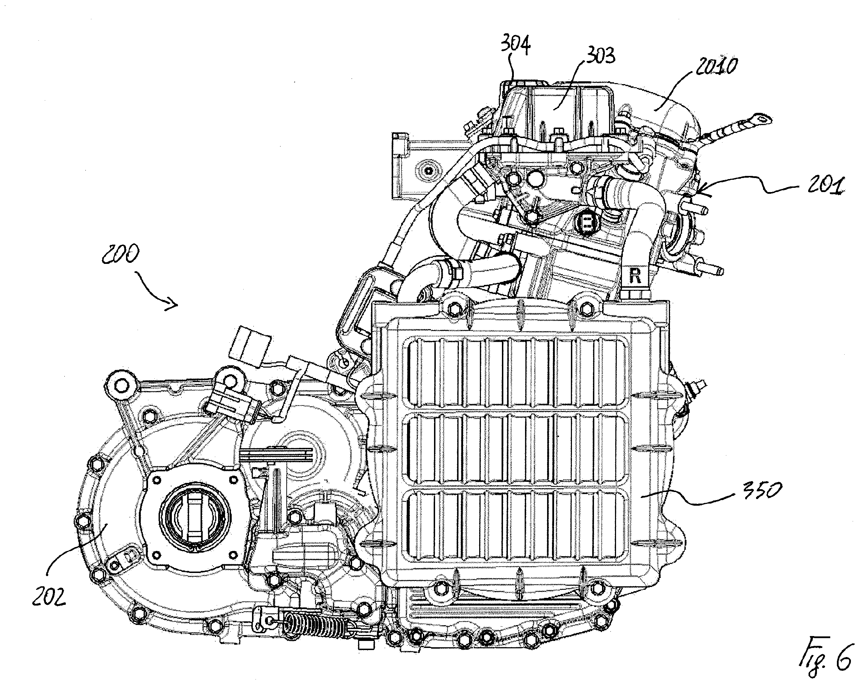

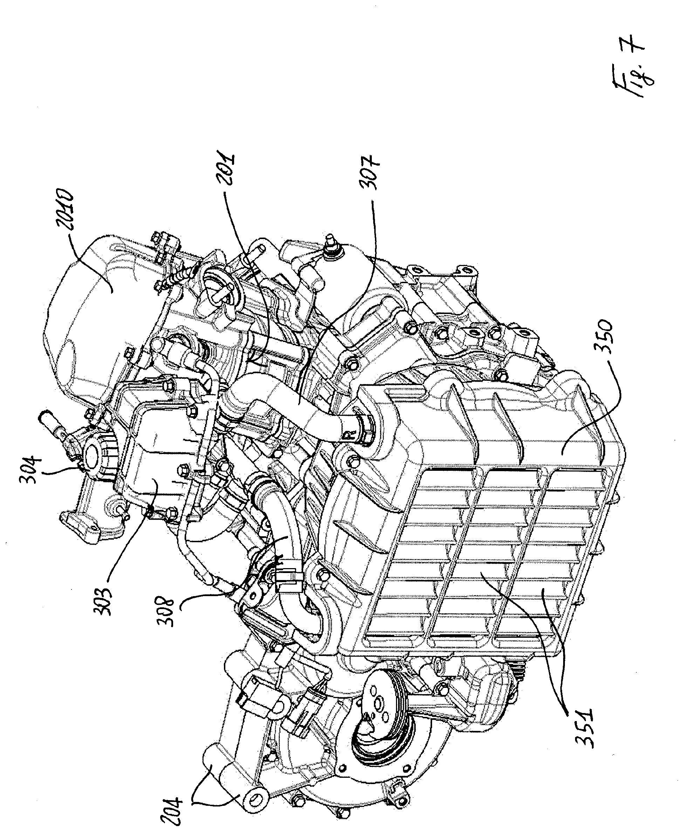

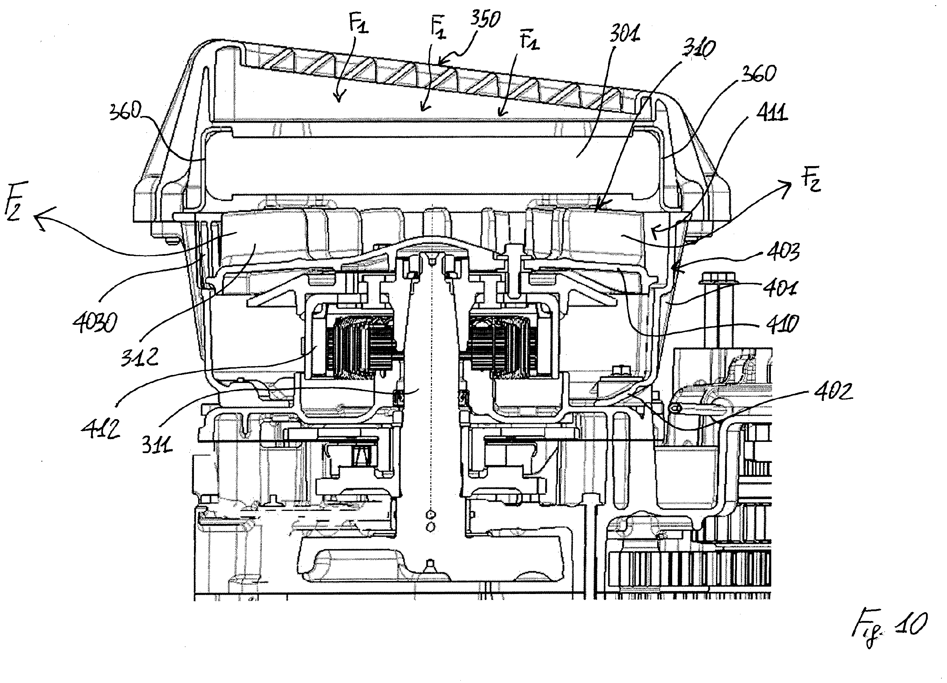

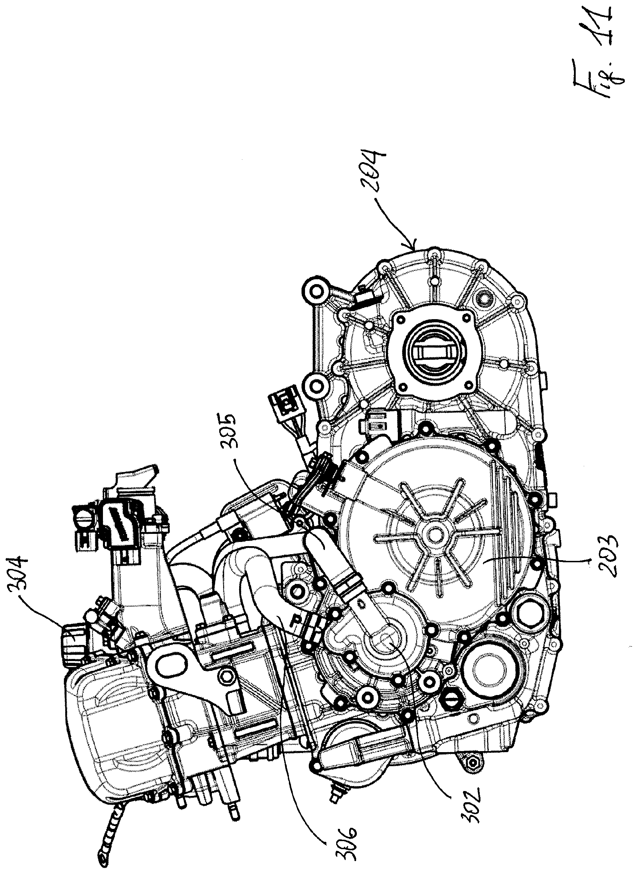

The powertrain, identified in Figures 6 to 11 by reference numeral 200, particularly comprises a thermal engine 201, a differential assembly 202, a clutch 203 and a gearshift (not identified by any reference numeral), where the differential assembly 202, the clutch 203 and the gearshift form part of the drive system by means of which the torque generated by engine 201 is transmitted to the driving wheels 102. For this purpose, differential 202 is positioned between the driving wheels 102, in mechanical connection with both right-hand and left-hand differential shafts.

The methods for transmitting the torque generated by engine 201 to the driving wheels 102 are substantially of the known type and therefore a detailed description thereof is omitted due to synthesis reasons.

The thermal engine 201 and the drive system or assembly are accommodated in a crankcase defined by two mutually fastened half-shells 204, also in this case according to substantially known methods and therefore not described in detail due to synthesis reasons.

With regard to the liquid cooling system, as depicted in the Figures, the same comprises a radiator 301 (with the classic "honeycomb" shape in the embodiment shown), a pump 302 for circulating the coolant, an expansion vessel 303 with a corresponding plug 304 thereof, where pump 302 is connected to radiator 301 by a first return tube 305 (from radiator 301 towards pump 302), while a second delivery tube 306 is between the pump and the hydraulic circuit (CT) defined in engine 201. A third tube 307 is designated to hydraulically connect the expansion vessel 303 to radiator 301, while a further tube 308 is designated to connect, together with the first tube 305, the outlet of radiator 301 to pump 302. A by-pass tube 309 is also provided for bypassing radiator 301 when the temperature is not the operating temperature. Finally, another return tube 309A towards pump 302 is identified.

A fan 310 is interposed between radiator 301 and the engine assembly, fan 310 being keyed in particular onto a rotating shaft 311 which extends from the drive shaft of the thermal engine 201, where the action of the engine results in fan 310 being rotated.

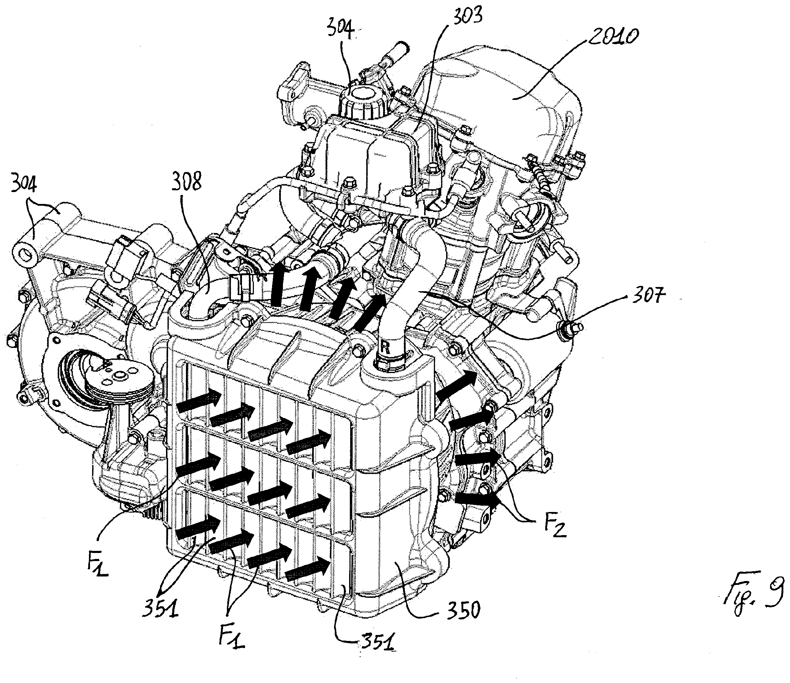

Moreover, as diagrammatically shown in Figure 9, the rotation of fan 310 results in the generation of an airflow (indicated by the arrows F1) from the space in front of the radiator through radiator 301, where the heat of the coolant in the radiator thereby is yielded to the air through radiator 301, and where the airflow outlet from radiator 301 (indicated by the arrows F2) is preferably deflected in direction of the engine assembly.

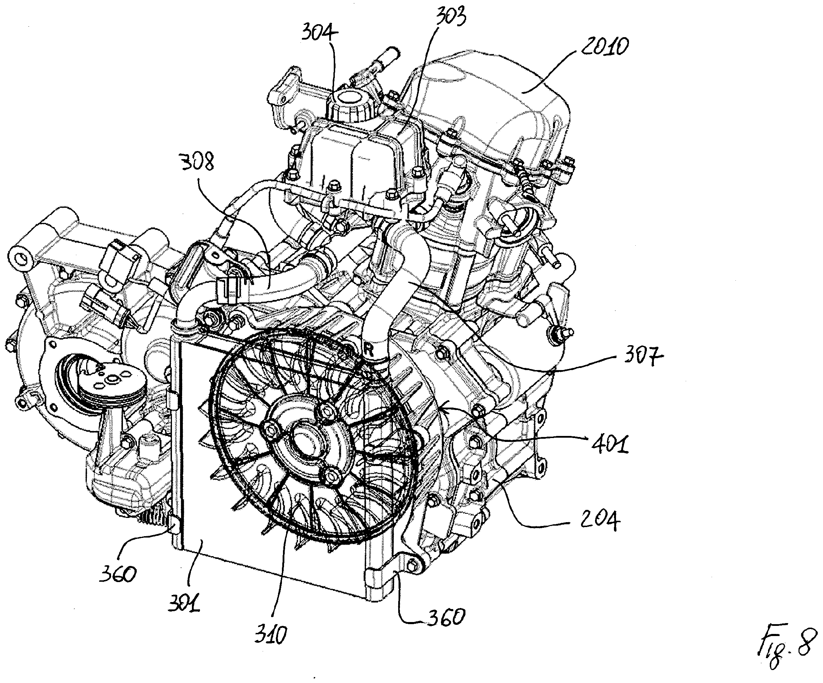

According to the present invention, a substantially vase-shaped support element 401 is used for this purpose, where a first open end portion 402 of support 401 is fastened to the engine assembly (in particular, to the containment crankcase 204), while radiator 301 is fastened on the second open end portion 403 of support 401, in particular by means of the connecting brackets 360 (shown in particular in Figures 8 and 9).

In order to protect radiator 301 and the connecting brackets 360, there is provided a cover mask 350 including a plurality of flaps (deflectors) 351 by means of which the air is conveyed from the space in front of radiator 301 against radiator 301 itself. The second end portion 403 of the support element 401 defines a housing space 411 inside of which fan 310 is positioned. This comprises a plurality of blades 312 which extend from a bottom 410.

Moreover, a further housing space 412 is defined downstream of bottom 410 of the bottom of fan 310 (with respect to the direction of the airflow generated by the rotation of fan 310, see the arrows F1 and F2), and therefore between cover 410 and the end portion 402 of support 401, in which further housing space there is accommodated an electric generator 500, the stator of which is coaxial to shaft 311 and the rotor of which is keyed onto shaft 311.

It is apparent from the above description that fan 310 is axial-centrifugal, where the definition "axial-centrifugal" means a condition where fan 310 axially sucks air (from the space in front of radiator 301, see the arrows F1) and radially discharges (in a centrifugal manner, see the arrows F2).

For this purpose, the end portion 403 of support 401 upstream of cover 410 has a plurality of slits or openings (4030) through which the air outlet from radiator 301 is radially deflected. For this purpose, the slits 4030 are made at predefined portions of the end portion 402. In particular, according to an embodiment, there are no slits 4030 in the lower portion (facing downwards) of end 402, rather in the upper portion (facing upwards) with an underlying angle of about 180° (with vertex on the rotation axis of fan 310), in particular in order to avoid the deflection of the air towards the ground because when vehicle 100 is used in the presence of dust and/or debris (unpaved roads, for example), the dust raised by the airflow could compromise or at least penalize the functionality of the engine due, for example to the too frequent clogging of the air filter, or also of radiator 310, as a consequence of the accumulation of dust and/or debris in the honeycomb.

The slits 4030 preferably are configured so as to deflect the air towards the powertrain, in particular towards engine 201, in order to subtract heat from the same powertrain. In particular, the temperature in use of engine 201 is greater than that of the airflow processed by fan 310, and therefore such an airflow may act as heat carrier for cooling engine 201.

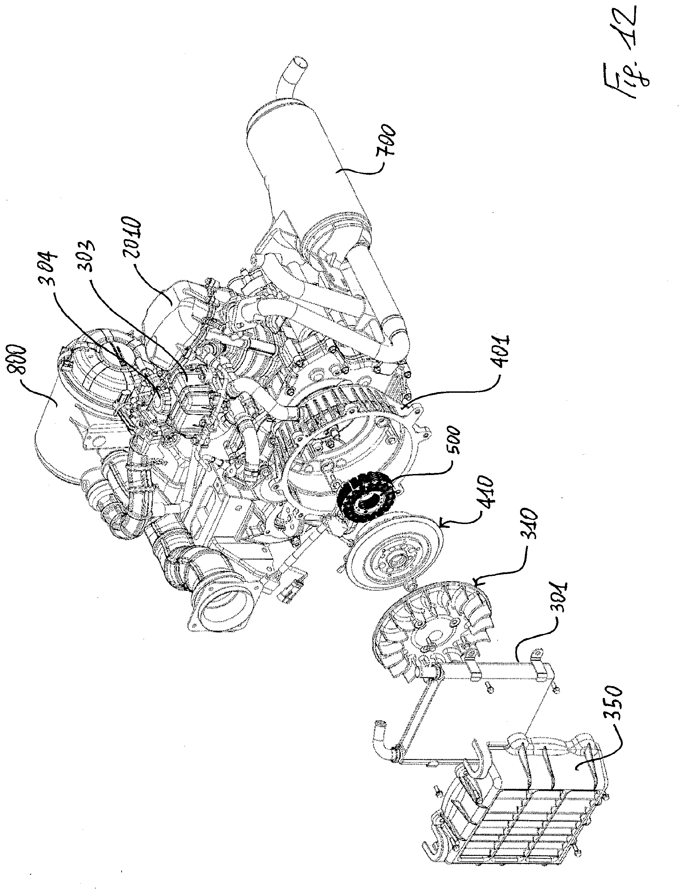

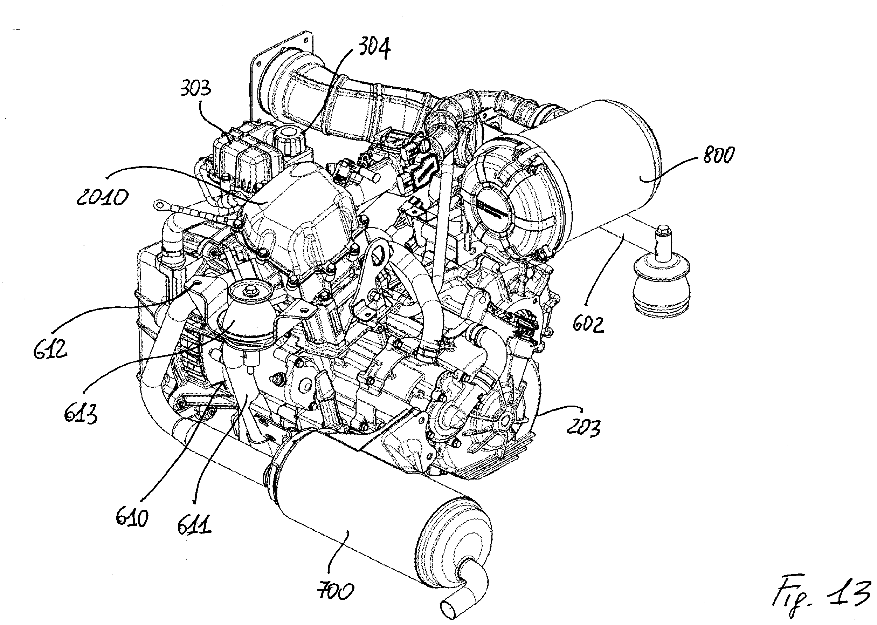

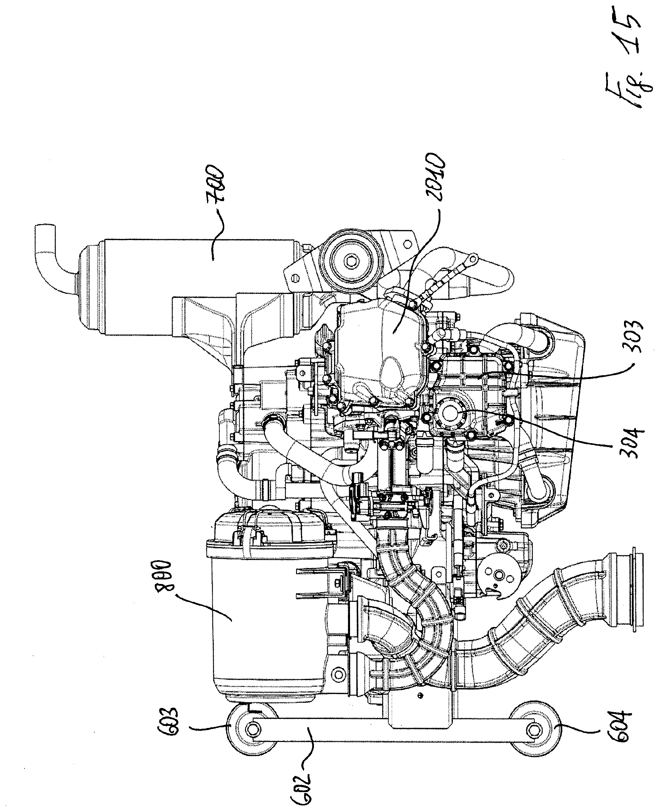

With reference again to Figures 6 to 12 and further with reference to Figures 13 to 16, a description is given below of further details of the system consisting of powertrain - cooling system according to the present invention.

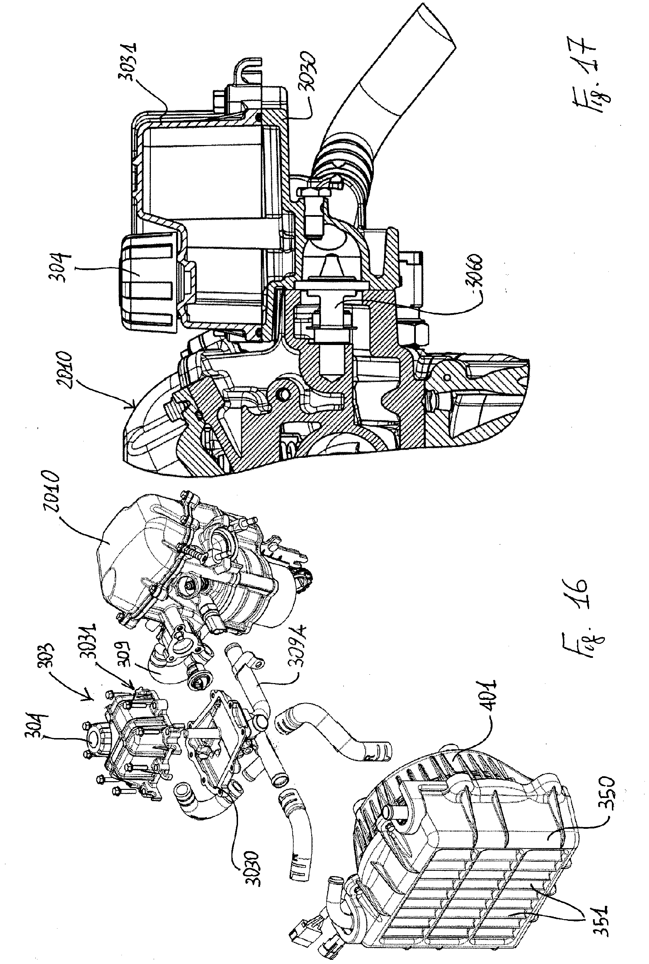

As shown, the expansion vessel 303 is fastened to the head 2010 of engine 201 (Figure 16) in a higher position than radiator 301, and in general in the highest position of the cooling circuit, to allow the filling thereof and the air purge. The expansion vessel 303 is mounted for the purpose to a metal support 3030 mounted to the head of engine 2010. The metal support 3030 particularly defines a surface on which a plastic containment vessel 3031 rests, which contains the liquid which serves for the operation of the expansion vessel and therefore of the cooling circuit. An important aspect lies in that the metal support 3031 is defined so as to carry the thermostatic valve (used to bypass the coolant according to the methods described above) indicated by 3060 in Figure 17. As mentioned, said thermostatic valve indeed is controlled by the thermostat integrated therein and is opened and closed to circulate or not to circulate water through the radiator, according to the engine temperature.

Therefore, one of the concepts underlying the present invention has been shown, i.e., that according to which the expansion vessel 303 is made integral with the engine block so that it is also part of the mass suspended from the frame of the vehicle (together with all the tubes and channeling defining the cooling circuit). Moreover, according to a further aspect, the thermostatic valve 3060 advantageously is integrated in the metal support 3030.

When the thermostatic valve opens, the circuit defined in the head 2010 of engine 201 is made to communicate with the inlet branch of radiator 301 through the metal support 3030. The upper plastic part 3031 always remains in communication with the lower part of the metal support 3030, which in turn communicates with the part of circuit which feeds radiator 301.

The upper part 3031 preferably is made of clear plastic also, but not only, to allow a reliable and constant (as well as immediate) check of the liquid level in the expansion vessel 303. The upper part 3031 is further provided with plug 304 for topping up the liquid. One of the main advantages of the embodiment described lies in that the cooling circuit may be directly filled in the production plant in which the assembly of the engine block takes place.

Moreover, the access to the expansion vessel 303 may be obtained by opening a suitable inspection door in a floor of the vehicle (of floor 106, for example) in position above engine 201.

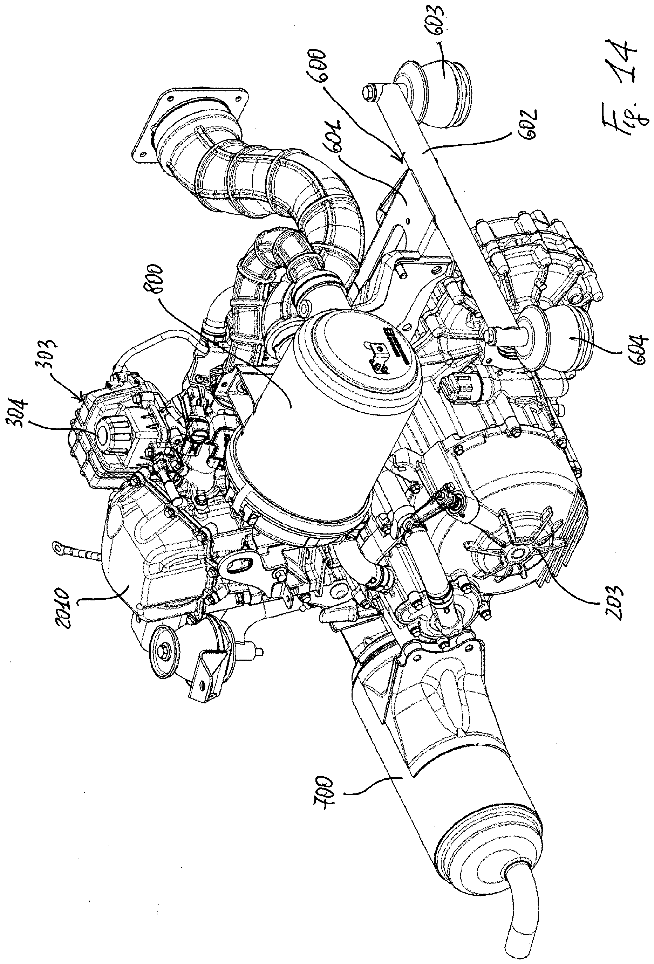

The solution according to which the engine block is fastened to the frame of the vehicle is among the peculiarities of the present invention. In particular, as shown in Figures 13 and 14, the engine block is fastened to the frame of vehicle 100 by a first "T"-shaped anchoring element 600 including a first anchor bar anchored to the engine assembly, in particular to one of the half-shells 204 of the housing crankcase, and a second bar 602 which is transverse to said first bar 601, at the opposite ends of which there are prepared a first shock absorbing pad 603 and a second shock absorbing pad 604, respectively, which are made of elastic material such as rubber or the like, said first pad 603 and second pad 604 being intended to be anchored resting on a part forming the frame such as a cross member or the like (not shown), where the powertrain is suspended from the frame itself, with said first pad 603 and second pad 604 restrained to the frame.

Moreover, a further fastening and support element is identified in Figure 13 by reference numeral 610 and comprises a bar 611 at an end of which there is fastened a bracket 612 which carries a shock absorbing pad 613, said bracket being adapted to be fastened to a component of the frame, for example a support cross member (not shown).

Finally, it is worth noting that the powertrain comprises component parts common to powertrains with thermal engine of the known type which, although they have been described in detail, are to be considered as belonging to the powertrain of the vehicle according to the present invention.

The Figures indeed show component parts herein mentioned by way of example, such as a system for discharging combustion gases including a muffler 700, and an air filter 800, where further component parts not described and/or mentioned may in any case be recognized from the Figures by those skilled in the art.

Thus, it has been demonstrated by the previous detailed description of the non-limiting embodiments of the present invention, shown in the drawings, that the generality of the present invention allows the drawbacks encountered in the prior art to be overcome or at least minimized, and therefore the desired results to be achieved.

Indeed, as shown, the present invention allows to design the frame and the layout of a vehicle which is compatible with different cooling systems, or in other words, the installation of different cooling systems on vehicles characterized by a common frame and/or layout.

Moreover, the present invention allows the mechanical stress on the cooling system to be limited to the mechanical stress substantially generated by the vibrations alone of the engine, while contrarily, by means of the present invention, parts forming the cooling system such as the joining tubes 307, 308, 305 and 306 between radiator 301, pump 302 and expansion vessel 303 are not subjected to mechanical stresses generated by the vibrations of the frame and/or vehicle 100 as a whole.

Although the present invention was clarified above by the description of the non-limiting embodiments thereof depicted in the drawings, the present invention is not limited to said non-limiting embodiments described above and shown in the drawings.

Contrarily, the scope of protection of the present invention is defined by the claims.

## Claims

1. A motor vehicle (100) comprising a front wheel (101), two rear wheels (102) arranged along a common rotation axis, a frame and a powertrain, wherein said powertrain comprises a thermal engine (201) and a mechanical transmission for transmitting the torque generated by said thermal engine (201) to at least one of said wheels (101, 102), where said thermal engine (201) and said mechanical transmission are accommodated in a crankcase (204), and where said powertrain comprises a liquid cooling system including a radiator (301) and a fan (310) adapted to generate, by rotation, an airflow through said radiator (301), **characterized in that** said frame comprises a box (104) delimited at the bottom by a floor (106), **in that** said powertrain is connected to said floor (106) in a back part so as to be like a mass suspended from said floor (106), **and in that** said radiator (301) and said fan (310) are arranged on said powertrain so as to form part of said mass suspended from said frame.

2. The vehicle (100) according to claim 1, **characterized in that** said cooling system comprises an expansion vessel (303) **and in that** said expansion vessel (303) is also integral with said powertrain so as to also form part of said mass suspended from said frame.

3. The vehicle (100) according to claim 2, **characterized in that** said expansion vessel (303) comprises a lower metal part (3030) fastened to said powertrain and an upper plastic material part (3031) including an opening and a corresponding closing plug (304).

4. The vehicle (100) according to claim 3, **characterized in that** said expansion vessel (303) is fastened to the head (2010) of said thermal engine (201).

5. The vehicle (100) according to one of claims 1 to 4, **characterized in that** said fan (310) is arranged between said crankcase (204) and said radiator (301).

6. The vehicle (100) according to one of claims 1 to 5, **characterized in that** said radiator (301) is supported by a support element (401) fastened to said crankcase (204).

7. The vehicle (100) according to one of claims 1 to 6, **characterized in that** said fan (310) is keyed onto a rotating shaft (311) which protrudes from said crankcase (204) and is rotated by said thermal engine (201).

8. The vehicle (100) according to claim 7, **characterized in that** said rotating shaft (311) coincides with the drive shaft of said thermal engine (201).

9. The vehicle (100) according to claim 6 or one of claims 7 to 8 in combination with claim 6, **characterized in that** said support element (401) is shaped so as to define an inner space (411) in which said fan (310) is at least partially accommodated.

10. The vehicle (100) according to claim 9, **characterized in that** said support element (401) has a main opening on the wall opposite to said crankcase (204), **and in that** said radiator (301) and said fan (310) are arranged facing said opening.

11. The vehicle (100) according to claim 9 or 10, **characterized in that** said support element (401) comprises a side wall which radially delimits said inner space and extends from said wall with said opening, **and in that** said side wall comprises a plurality of secondary openings (4030) adapted to allow the at least partial discharge of the airflow from said radiator (301).

12. The vehicle (100) according to one of claims 1 to 11, **characterized in that** said cooling system comprises a pump (302) for circulating said coolant, **and in that** said pump (302) is actuated by a rotating shaft which protrudes from said crankcase (204) and is rotated by said thermal engine (201).

13. The vehicle (100) according to claim 12, **characterized in that** said rotating shaft for actuating said pump (302) coincides with the drive shaft of said thermal engine (201).

14. The vehicle (100) according to one of claims 12 and 13, **characterized in that** said pump (302) is positioned with respect to said powertrain on the side opposite to that of said radiator (301).

15. The vehicle (100) according to one of claims 1 to 14, **characterized in that** said vehicle (100) has a three-wheel type configuration with one front steering wheel and two rear wheels in line with each other, and comprises a cabin (103) for transporting passengers and said box (104) is for transporting goods and is positioned at the back with respect to said cabin (103), and wherein said powertrain is like a mass suspended from said frame in position below said box (104).

## Patentansprüche

1. Kraftfahrzeug (100), umfassend ein Vorderrad (101), zwei Hinterräder (102), die entlang einer gemeinsamen Drehachse angeordnet sind, einen Rahmen und einen Antriebsstrang, wobei der Antriebsstrang eine Wärmekraftmaschine (201) und ein mechanisches Getriebe zum Übertragen des von der Wärmekraftmaschine (201) erzeugten Drehmoments auf mindestens eines der Räder (101, 102) umfasst, wobei die Wärmekraftmaschine (201) und das mechanische Getriebe in einem Kurbelgehäuse (204) untergebracht sind, und wobei der Antriebsstrang ein Flüssigkeitskühlsystem umfasst, das einen Kühler (301) und einen Lüfter (310) beinhaltet, der dazu geeignet ist, durch Drehung eine Luftströmung durch den Kühler (301) zu erzeugen, **dadurch gekennzeichnet, dass** der Rahmen einen Kasten (104) umfasst, der an der Unterseite durch einen Boden (106) begrenzt ist, dadurch, dass der Antriebsstrang mit dem Boden (106) in einem hinteren Teil verbunden ist, so dass er wie eine an dem Boden (106) aufgehängte Masse ist, und dadurch, dass der Kühler (301) und der Lüfter (310) an dem Antriebsstrang angeordnet sind, so dass sie einen Teil der an dem Rahmen aufgehängten Masse bilden.

2. Fahrzeug (100) nach Anspruch 1, **dadurch gekennzeichnet, dass** das Kühlsystem ein Ausdehnungsgefäß (303) umfasst, und dadurch, dass das Ausdehnungsgefäß (303) auch einstückig mit dem Antriebsstrang ist, so dass es auch einen Teil der an dem Rahmen aufgehängten Masse bildet.

3. Fahrzeug (100) nach Anspruch 2, **dadurch gekennzeichnet, dass** das Ausdehnungsgefäß (303) einen unteren Metallteil (3030), der an dem Antriebsstrang befestigt ist, und einen oberen Kunststoffmaterialteil (3031) umfasst, der eine Öffnung und einen entsprechenden Verschlussstopfen (304) beinhaltet.

4. Fahrzeug (100) nach Anspruch 3, **dadurch gekennzeichnet, dass** das Ausdehnungsgefäß (303) an dem Kopf (2010) der Wärmekraftmaschine (201) befestigt ist.

5. Fahrzeug (100) nach einem der Ansprüche 1 bis 4, **dadurch gekennzeichnet, dass** der Lüfter (310) zwischen dem Kurbelgehäuse (204) und dem Kühler (301) angeordnet ist.

6. Fahrzeug (100) nach einem der Ansprüche 1 bis 5, **dadurch gekennzeichnet, dass** der Kühler (301) von einem Stützelement (401) gestützt wird, das an dem Kurbelgehäuse (204) befestigt ist.

7. Fahrzeug (100) nach einem der Ansprüche 1 bis 6, **dadurch gekennzeichnet, dass** der Lüfter (310) auf eine Drehwelle (311) aufgekeilt ist, die von dem Kurbelgehäuse (204) hervorsteht und durch die Wärmekraftmaschine (201) gedreht wird.

8. Fahrzeug (100) nach Anspruch 7, **dadurch gekennzeichnet, dass** die Drehwelle (311) mit der Antriebswelle der Wärmekraftmaschine (201) zusammenfällt.

9. Fahrzeug (100) nach Anspruch 6 oder einem der Ansprüche 7 bis 8 in Kombination mit Anspruch 6, **dadurch gekennzeichnet, dass** das Stützelement (401) so geformt ist, dass es einen Innenraum (411) definiert, in dem der Lüfter (310) mindestens teilweise untergebracht ist.

10. Fahrzeug (100) nach Anspruch 9, **dadurch gekennzeichnet, dass** das Stützelement (401) eine Hauptöffnung in der Wand gegenüber dem Kurbelgehäuse (204) aufweist, und dadurch, dass der Kühler (301) und der Lüfter (310) der Öffnung zugewandt angeordnet sind.

11. Fahrzeug (100) nach Anspruch 9 oder 10, **dadurch gekennzeichnet, dass** das Stützelement (401) eine Seitenwand umfasst, die den Innenraum radial begrenzt und sich von der Wand mit der Öffnung erstreckt, und dadurch, dass die Seitenwand eine Vielzahl von sekundären Öffnungen (4030) umfasst, die dazu geeignet sind, das zumindest teilweise Ausströmen der Luftströmung aus dem Kühler (301) zu ermöglichen.

12. Fahrzeug (100) nach einem der Ansprüche 1 bis 11, **dadurch gekennzeichnet, dass** das Kühlsystem eine Pumpe (302) zum Zirkulieren von Kühlmittel umfasst, und dadurch, dass die Pumpe (302) durch eine Drehwelle betätigt wird, die von dem Kurbelgehäuse (204) hervorsteht und durch die Wärmekraftmaschine (201) gedreht wird.

13. Fahrzeug (100) nach Anspruch 12, **dadurch gekennzeichnet, dass** die Drehwelle zum Betätigen der Pumpe (302) mit der Antriebswelle der Wärmekraftmaschine (201) zusammenfällt.

14. Fahrzeug (100) nach einem der Ansprüche 12 und 13, **dadurch gekennzeichnet, dass** die Pumpe (302) in Bezug auf den Antriebsstrang an der dem Kühler (301) gegenüberliegenden Seite positioniert ist.

15. Fahrzeug (100) nach einem der Ansprüche 1 bis 14, **dadurch gekennzeichnet, dass** das Fahrzeug (100) eine Konfiguration vom dreirädrigen Typ mit einem vorderen Steuerrad und zwei miteinander ausgerichteten Hinterrädern aufweist und eine Kabine (103) zum Transportieren von Fahrgästen umfasst und der Kasten (104) zum Transportieren von Gütern dient und in Bezug auf die Kabine (103) hinten positioniert ist, und wobei der Antriebsstrang wie eine an dem Rahmen in einer Position unterhalb des Kastens (104) aufgehängte Masse ist.

## Revendications

1. Véhicule à moteur (100) comprenant une roue avant (101), deux roues arrière (102) disposées le long d'un axe de rotation commun, un châssis et un groupe motopropulseur, dans lequel ledit groupe motopropulseur comprend un moteur thermique (201) et une transmission mécanique pour transmettre le couple généré par ledit moteur thermique (201) à au moins l'une desdites roues (101, 102), où ledit moteur thermique (201) et ladite transmission mécanique sont logés dans un carter (204), et où ledit groupe motopropulseur comprend un système de refroidissement par liquide comprenant un radiateur (301) et un ventilateur (310) adapté pour générer, par rotation, un flux d'air à travers ledit radiateur (301), **caractérisé en ce que** ledit châssis comprend un boîtier (104) délimité au fond par un plancher (106), **en ce que** ledit groupe motopropulseur est relié audit plancher (106) dans une partie arrière de manière à être comme une masse suspendue à partir dudit plancher (106), et **en ce que** ledit radiateur (301) et ledit ventilateur (310) sont disposés sur ledit groupe motopropulseur de manière à former une partie de ladite masse suspendue à partir dudit châssis.

2. Véhicule (100) selon la revendication 1, **caractérisé en ce que** ledit système de refroidissement comprend un vase d'expansion (303) et **en ce que** ledit vase d'expansion (303) est également solidaire dudit groupe motopropulseur de manière à faire également partie de ladite masse suspendue à partir dudit châssis.

3. Véhicule (100) selon la revendication 2, **caractérisé en ce que** ledit vase d'expansion (303) comprend une partie métallique inférieure (3030) fixée audit groupe motopropulseur et une partie supérieure en matière plastique (3031) comprenant une ouverture et un bouchon de fermeture correspondant (304).

4. Véhicule (100) selon la revendication 3, **caractérisé en ce que** ledit vase d'expansion (303) est fixé à la tête (2010) dudit moteur thermique (201).

5. Véhicule (100) selon l'une des revendications 1 à 4, **caractérisé en ce que** ledit ventilateur (310) est disposé entre ledit carter (204) et ledit radiateur (301).

6. Véhicule (100) selon l'une des revendications 1 à 5, **caractérisé en ce que** ledit radiateur (301) est supporté par un élément de support (401) fixé audit carter (204).

7. Véhicule (100) selon l'une des revendications 1 à 6, **caractérisé en ce que** ledit ventilateur (310) est claveté sur un arbre rotatif (311) qui fait saillie dudit carter (204) et est entraîné en rotation par ledit moteur thermique (201).

8. Véhicule (100) selon la revendication 7, **caractérisé en ce que** ledit arbre rotatif (311) coïncide avec l'arbre d'entraînement dudit moteur thermique (201).

9. Véhicule (100) selon la revendication 6, ou l'une des revendications 7 à 8 en combinaison avec la revendication 6, **caractérisé en ce que** ledit élément de support (401) est formé de manière à définir un espace intérieur (411) dans lequel ledit ventilateur (310) est au moins partiellement logé.

10. Véhicule (100) selon la revendication 9, **caractérisé en ce que** ledit élément de support (401) a une ouverture principale sur la paroi opposée audit carter (204), et **en ce que** ledit radiateur (301) et ledit ventilateur (310) sont disposés en face de ladite ouverture.

11. Véhicule (100) selon la revendication 9 ou 10, **caractérisé en ce que** ledit élément de support (401) comprend une paroi latérale qui délimite radialement ledit espace intérieur et s'étend à partir de ladite paroi avec ladite ouverture, et **en ce que** ladite paroi latérale comprend une pluralité d'ouvertures secondaires (4030) adaptées pour permettre l'évacuation au moins partielle du flux d'air dudit radiateur (301).

12. Véhicule (100) selon l'une des revendications 1 à 11, **caractérisé en ce que** ledit système de refroidissement comprend une pompe (302) pour faire circuler ledit liquide de refroidissement, et **en ce que** ladite pompe (302) est actionnée par un arbre rotatif qui fait saillie dudit carter (204) et est entraîné en rotation par ledit moteur thermique (201).

13. Véhicule (100) selon la revendication 12, **caractérisé en ce que** ledit arbre rotatif pour entraîner ladite pompe (302) coïncide avec l'arbre d'entraînement dudit moteur thermique (201).

14. Véhicule (100) selon l'une des revendications 12 et 13, **caractérisé en ce que** ladite pompe (302) est positionnée par rapport audit groupe motopropulseur du côté opposé au côté dudit radiateur (301).

15. Véhicule (100) selon l'une des revendications 1 à 14, **caractérisé en ce que** ledit véhicule (100) a une configuration de type à trois roues avec un volant de direction avant et deux roues arrière alignées l'une par rapport à l'autre, et comprend une cabine (103) pour transporter des passagers et ledit boîtier (104) est pour transporter des marchandises et est positionnée à l'arrière par rapport à ladite cabine (103), et dans lequel ledit groupe motopropulseur est comme une masse suspendue à partir dudit châssis en position sous ledit boîtier (104).
